# EUROPEAN PATENT APPLICATION

(11) **EP 1 077 031 A2**
(43) Date of publication of application: **21.02.2001**
(21) Application number: 00202890.0
(22) Date of filing: 17.08.2000
(51) Int. Cl.: A21D 8/04

(54) **Enzyme mixture for extending textural shelf life of grain flour products**

(30) Priority: 17.08.1999 US 375891
(71) Applicant: QUEST INTERNATIONAL B.V., 1411 GP Naarden (NL)
(72) Inventor: Gautchier. Peter M., McHenry, Illinois 60050 (US); Piggott, Richie P., St. Charles, Illinois 60175 (US)
(74) Representative: Jorritsma, Ruurd

(57) **Abstract**

Enzyme combinations of amylase and invertase are used to make high moisture, grain flour and sucrose based, crumb structured food products which have an extended shelf life and improved taste. The enzyme combination is particularly useful for making donuts which exhibit inhibited staling for extended periods of time.

## Description

### BACKGROUND OF THE INVENTION

### (1) Field of the Invention

The present invention relates to a method and enzyme compositions for the preparation of grain flour based food products, with a crumb structure and a relatively high moisture content and having an extended textural shelf life and improved taste. The products are formed from a mixture containing flour, a leavening agent, sucrose and other standard ingredients and a mixture of carbohydrase and invertase enzymes. In particular, the present invention relates to a method which uses a mixture of amylase, especially bacterial amylase, and invertase for the preparation of donuts.

### (2) Description of Related Art

There is no known prior art showing the use of amylase and invertase together for high moisture, grain flour products containing significant amounts of sugar. The prior art recognizes the problem or staling of such products which include donuts, cakes and breads. All of these products have a crumb structure and a high moisture content.

Invertase is used in cookies and other baked, low moisture products to convert sucrose to fructose and to increase shelf life and improved texture. Examples of U.S. patents are U.S. Patent Nos. 4,344,969 to Youngquist et al; 4,781,938 to Pflaumer et al; 4,457,946 to Hong et al. Each patent is related to cookie texture modification. Cookies have very different textures and compositions compared to breads, cakes and donuts.

U.S. Patent No. 3,026,205 to Stone describes the use of bacterial alpha amylase in the preparation of cakes, crackers and the like which are resistant to staling. The products are said to be pie-like in some instances and include fillings. Amylases are conventionally used in baked products in general.

Tressler, et al in Food Products Formulary (The AVI Publishing Company, Inc.) describe various types of donuts. Examples are the cake donut mixes as follows:

### CAKE DOUGHNUT MIX

| Ingredients | Regular (%) | Rich (%) |
|---|---|---|
| Soft wheat flour | 40.0 | 40.0 |
| Hard wheat four | 18.0 | 20.0 |
| Sugar | 24.4 | 22.7 |
| Corn sugar | 1.2 | 2.0 |
| Egg yolk | 2.8 | 4.7 |
| Dry skim milk | 3.5 | 2.7 |
| Cottonseed oil | 3.5 | 3.7 |
| Salt | 0.9 | 0.8 |
| Soda | 0.8 | 0.8 |
| Sodium acid pyrophosphate (Donut Pyro) | 1.1 | 1.1 |
| Soy flour, lecithinated | 3.5 | 1.4 |

Following is a typical starting formula, 100% flour basis, for formula adjustment:

| | % |
|---|---|
| Hard wheat flour | 25 |
| Soft wheat four | 75 |
| Sugar | 40 |
| Salt | 1.5 |
| Soda | 1.4 |
| Sodium acid pyrophosphate | 2.0 |
| Egg yolk | 5.0 |
| dry skim milk | 4.5 |
| Shortening | 5.0 |
| Soya flour | 2.5 |

### CAKE DOUGHNUT MIX

| Ingredients | Lb | Oz |
|---|---|---|
| Fine granulated sugar ¹ | 22 | |
| Shortening or vegetable oil | 4 | |
| Flour (9 1/2% protein)² | 61 | |
| Soya flour | | 4 |
| Dry milk, nonfat | 3 | |
| Salt | 1 | |
| Soda bicarbonate | | 12 |
| Sodium acid pyrophosphate | 1 | |
| Egg yolk solids (Henningsen) | 3 | |
| Nutmeg | | 3 |
| Vanilla | (imitation) | 1 |
| Total | 100 | 0 |

| | | |
|---|---|---|
| ¹Note: If fried color is light, increase sugar 1-2 lb. | | |
| ² Flour should be a blend of cake, pastry, and bread flours. | | |

The procedure for preparing the donuts is: Dry mix sugar and shortening together. Slowly add and blend in remaining ingredients. Mix thoroughly. To 5 lb of the above mix add 32-35 oz of water and mix 1-2 min at second speed of mixer. Fry at 385°F for 40-50 seconds on each side.

These are examples of chemically leavened products. Yeast is also used for leavening in some instances.

### SUMMARY OF THE INVENTION

The present invention relates to a method and enzyme compositions for making a high moisture, grain flour based food product with an extended shelf life which comprises: providing a mixture which comprises water, the grain flour, sucrose, egg, milk, shortening, amylase, optionally flavors, a chemical leavening agent or yeast, and an amount of an invertase which can convert a portion of the sucrose to dextrose and fructose; forming the mixture; and baking or frying the formed mixture to produce the grain flour based product. The term "grain flour based products" as used herein means cakes, donuts and breads from grain flour which are expanded by a chemical or biological leavening agent (yeast). The crumb structure is characteristic of a leavened product. The term "high moisture" means between about 19 and 38% by weight of water in the baked product (source USDA database). Such products have a special problem of staling as is well known to those skilled in the art.

In particular, the present invention relates to a method and enzyme compositions for making a high moisture, grain flour based food product with an extended shelf life which comprises: providing a mixture which comprises water, the grain flour, sucrose, corn sugar, egg yolk, skim milk, shortening, sodium pyrophosphate as the leaven, bacterial amylase, optionally flavors and between about 0.0001 and 1 percent by weight of an invertase which can convert a portion of the sucrose into dextrose and fructose; and baking or frying the formed mixture to produce the grain flour based food product.

Further, the present invention relates to a method and enzyme compositions for making donuts with an extended shelf life which comprises: providing a donut mixture which comprises water, grain flour, sucrose, corn sugar, egg yolk, skim milk, shortening, sodium pyrophosphate, bacterial amylase and optionally flavors and between about 0.0001 and 1 percent by weight of an invertase which can convert a portion of the sucrose into dextrose and fructose; forming the donut mixture; and baking or frying the formed donut mixture to produce the donuts.

The present invention relates to a dry mixture which comprises water, the grain flour, sucrose, egg, milk, shortening, amylase, optionally flavors, chemical leavening or yeast, and invertase in an amount which converts a portion of the sucrose to dextrose and fructose in the presence of water, wherein the dry mixture is to be mixed with egg, shortening and water and then baked or fried to form a high moisture, grain flour based food product with an extended shelf life.

Further, the present invention relates to a dry mixture which comprises flour, sucrose, corn sugar, dry skim milk, sodium pyrophosphate and bacterial amylase, optionally flavors admixed with an invertase, wherein the invertase is between about 0.0001 and 1 percent by weight of the mixture, wherein the dry mixture is to be mixed with egg yolk, shortening, and water and then baked or fried to form a high moisture, grain flour based food product with an extended shelf life.

Further still, the present invention relates to a dry donut mixture which comprises: grain flour, sucrose, corn sugar, dry skim milk, sodium pyrophosphate, bacterial amylase, optionally flavors admixed with an invertase, wherein the invertase is between about 0.0001 and 1 percent by weight of the donut mixture, wherein the dry donut mixture is to be mixed with egg yolk, shortening, and water and baked or fried to form the donut with an extended shelf life.

It is good practice to hold the dough forming the grain flour based product for a time necessary to allow the leavening to act and the dough to rise. This also allows time for the amylase and the invertase to act on the starch and sugar, respectively.

Finally the present invention relates to an enzyme preparation for use in making a grain flour based product which comprises: bacterial amylase; and invertase, wherein the weight ratio of (a) to (b) is between about 5 x 10⁻⁴ to 1 and 0.4 to 1. The amylase in the mixture of amylase and invertase is between 0.005 to 30% amylase and 0.1 to 70% invertase. The percentages relative to the base mix of the amylase and invertase varies on the level of the enzymes present in the blend. The broad range is: bacterial amylase at 0.0001 to 1% and the preferred range is 0.01 and 01% by weight (10 ppm to 100 ppm). For invertase the broad range is 0.0001 to 1% by weight and the preferred range is 0.01 to 0.1% by weight (10 ppm to 100 ppm).

### BRIEF DESCRIPTION OF DRAWINGS

Figure 1 is a graph showing percent resiliency as a function of time for donuts produced using the invertase and amylase enzyme mixture of the present invention and determined with a TAXT2 texture analyzer. A higher number means the sample is more resilient (elastic).
Figure 2 is a graph showing firmness of the donuts as a function of time for the donuts of Figure 1.
Figure 3 is a graph showing force to compress a Pullman bread prepared using the invertase and amylase enzyme mixture of the present invention as a function of time as determined with a TAXT2 texture analyzer. A higher number means a firmer product. The samples of 25 and 50 ppm of the mixture were gummy and unacceptable.
Figure 4 is a graph showing percent resiliency as a function of time for the Pullman bread of Figure 3.

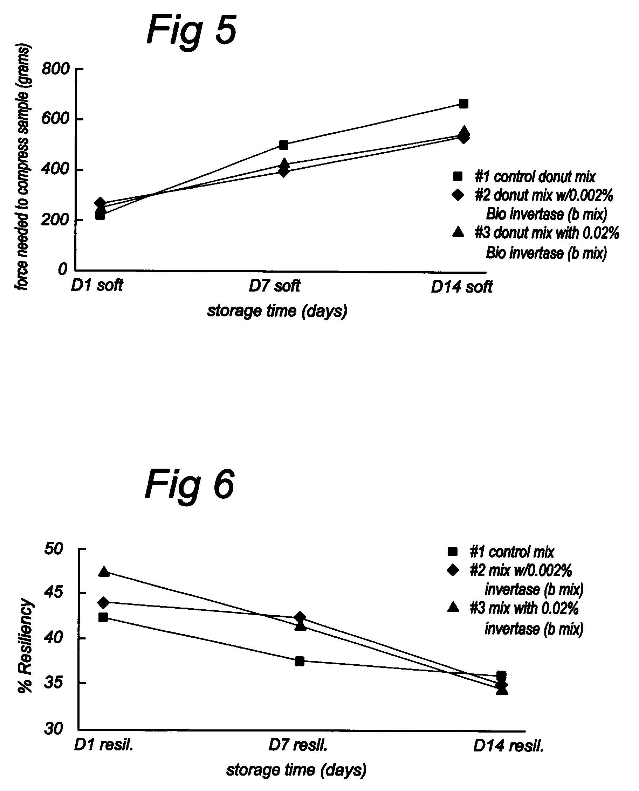

Figure 5 is a graph showing force to compress as a function of time for invertase alone used in making donuts. The term "b. mix" means based upon the donut mix.
Figure 6 is a graph showing percent resiliency as a function of time for invertase alone used in making donuts and determined with a TAXT2 analyzer. A higher number means a more resilient sample. The resiliency data was analyzed statistically at 95% confidence.
Figure 7 is a graph showing force to compress of donuts made separately with invertase or bacterial amylase. A higher number means firmer sample. The use levels were based on mix or sugar amount.
Figure 8 is a graph showing percent resiliency of donuts made separately with bacterial amylase or invertase separately and determined with a TAXT2 analyzer. Higher number means samples more resilient, use levels based on mix or sugar content.

### DESCRIPTION OF PREFERRED EMBODIMENTS

There are no known effective agents that minimize or eliminate the unpleasant textures generated by the staling process in donuts. Unexpectedly, the enzyme preparation containing bacterial amylase and invertase used in the method of the present invention is able to provide extended freshkeeping in donuts with a typical shelf-life which can be to 14 days (but not limited to that) of ambient storage. This enzyme mixture consists of the two active carbohydrase enzymes, which provide softness with a quicker meltaway or release in the mouth. Softness data, generated using a texture analyzer, have shown that firmness was reduced by 50% over time without radically altering the typical texture of a donut. In other words, with the use of this enzyme mixture, a 10 day old donut has softness measurements like that of a 5 day old donut or even less. Use of this enzyme mixture for freshkeeping in other baked products, such as breads and cakes, also provides extended shelf-life.

The use of both components together for freshkeeping, particularly in donuts, using the method of the present invention is new. Amylases are frequently used in bread making, although bacterial amylase is used less often. Invertases are widely used in the confectionery industry and for chewable cookies in the baking industry. Yet, the combination of both of them has not been used to promote softness and a clean mouth release in leavened, high moisture, bakery products, particularly in donuts where the shelf-life is very short. This enzyme mixture is especially effective for donuts and cakes which usually contain a relatively large amount of sucrose in the formulation.

Combining invertase and amylase enzymes affords two modes of action for freshness and providing synergistic results. Bacterial amylase acts on gelatinized and damaged starch forming smaller chain polysaccharides. The invertase acts on the sucrose to form glucose and fructose which have humectant properties. Using the invertase with the amylase lessens the gumminess otherwise generated when only using an amylase. Invertase used without the bacterial amylase is not sufficient to aid in producing a significantly softer product.

### EXAMPLES 1 TO 8

The following Examples 5 to 8 (do-5 to do-8) show the use of a mixture of invertase and bacterial amylase in the preparation of donuts. Examples 1 to 4 (do-1 to do-4) show the results without invertase. The formulations are shown in the following Table 1.

**TABLE 1**

| Ingredient | % basis m | control do-grams | do-2 grams | do-3 grams | do-4 grams | do-5 grams | do-6 grams | do-7 grams | do-8 grams |
|---|---|---|---|---|---|---|---|---|---|
| donut base flour and chemical leavening (sodium acid phosphate | 100 | 750 | 750 | 750 | 750 | 750 | 750 | 750 | 716 |
| sugar | 33.1 | 248 | 248 | 248 | 248 | 248 | 248 | 248 | 236.8 |
| egg yoke | 1.12 | 8.4 | 8.4 | 8.4 | 8.4 | 8.4 | 8.4 | 8.4 | 8.0 |
| powder | | | | | | | | | |
| water | 51 | 382.5 | 382.5 | 382.5 | 382.5 | 382.5 | 382.5 | 382.5 | 365.2 |
| bact. amylase | | | 0.038 | 0.019 | 0.009 | 0.038 | 0.019 | 0.009 | 0.0564 |
| invertase | | | | | | 0.05 | 0.05 | 0.05 | |
| | | 1389 | | | | | | 1388.98 | |
| | | | | | | | | 9 | |
| do-1 is a control with no enzymes. do-2 contains 50 ppm bacterial amylase only (activity 5,000,000 µ/g) do-3 contains 25 ppm bacterial amylase only do-4 contains 12 ppm bacterial amylase only do-5 contains 50 ppm bacterial amylase only and 0.02% by weight of invertase do-6 contains 25 ppm bacterial amylase and 0.02% by weight of invertase (activity 400,000 µ/g). do-7 contains 12 ppm bacterial amylase and 0.02% invertase. do-8 contains 75 ppm bacterial amylase and no invertase. | | | | | | | | | |

The donut mixture was mixed on low for one (1) minute and on medium for four (4) minutes, held for ten (10) minutes and then fried at 355°F for 70 seconds.

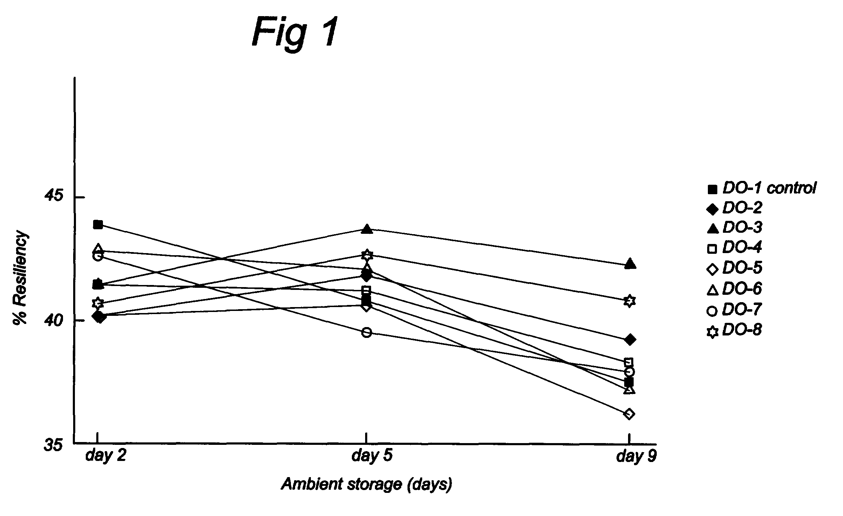

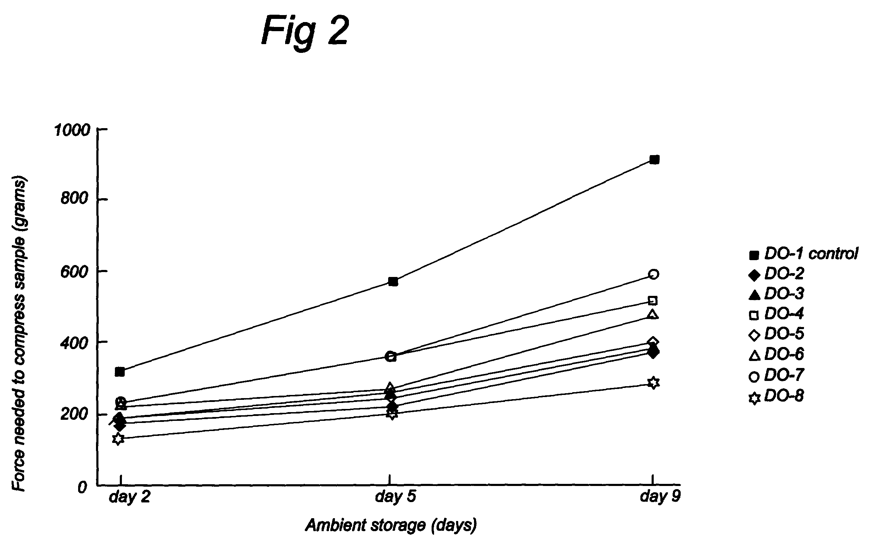

When the donuts were fresh (just cooked), do-2 was doughy and stuck to the teeth and was unacceptable. Thus amylase is necessary. Dos-4, -5 and -6 were not sticky and had a clean melt-way elimination in the mouth. Figure 1 shows the elasticity as a function of time. The elasticity was comparable. Figure 2 shows the firmness of the donuts.

The eight (8) different samples of lab made donuts containing assorted versions and levels of the enzymes were taste tested. These donuts were 10 days of age. Firmness and resiliency graph data were provided on all eight (8) samples (including the control) for day 2, day 5 and day 9. After viewing the data, tasters asked to first look at samples 1, 2, 3 and 8. Comments were as follows: Do-2, like chewing gum; Do-3 some chewing gum: Do-6 sticky; Do-8 was not tasted in the session. The tasters were intrigued by how vastly different the texture was from the control. Sample Do-7 was tasted and considered to be acceptable. The donuts from Do-7 had at least a 10-14 day shelf life and did not change much after five (5) days. Donuts presently being marketed without the present invention have a 12-14 day shelf-life. Donuts made in various regions of the country have very different distribution deliveries, from many hours to many days.

### EXAMPLES 9 and 10

The following Examples show the preferred amounts of the mixture of bacterial amylase and invertase for donuts. Table 2 shows the amounts of the bacterial amylase and invertase.

**TABLE 2**

| | Percent By Weight | |
|---|---|---|
| Ingredient | Version I | Version II |
| bulking agent (flour) | 84.07 | 81.54 |
| (5,000,000 µ/g)⁽¹⁾ bacterial amylase | 2.53 (calculated activity 126,500 µg) | 5.06 (calculated activity 253,000 µg) |
| invertase⁽¹⁾ (400,000 µ/g) | 13.40 (53,600 µg) | 13.40 (53,600 µg) |

| | | |
|---|---|---|
| ⁽¹⁾ - Activity in flour as a bulking agent. | | |

The formulations are shown in Table 3.

**TABLE 3**

| Ingredients | % Flour Basis | % by Weight |
|---|---|---|
| Cake flour | 75.4 | 47.10 |
| Bread flour | 24.6 | 15.36 |
| Baker's sugar | 35.3 | 22.05 |
| Vegetable oil | 6.4 | 4.00 |
| Nonfat dry milk | 5.3 | 3.31 |
| PRO-FAM®S-955 soy protein isolate | 3.4 | 2.12 |
| Dried egg yolk | 3.3 | 2.06 |
| Sodium acid pyrophosphate | 2.2 | 1.37 |
| Salt | 1.8 | 1.12 |
| Baking soda | 0.7 | 0.44 |
| Dextrose | 1.4 | 0.87 |

The products produced were preferred.

### EXAMPLES 11 TO 13

These examples show the use of the mixture of Example 2 in making Pullman Breads. The term "Pullman" refers to a type of pan used in the manufacture of bread. The pans have lids and sandwich breads are produced. The breads were formulated as shown in Table 4.

**TABLE 4**

| Sponge and Dough Method White Pullman Bread | | | | | | | | |
|---|---|---|---|---|---|---|---|---|
| Sponge Ingredients | Baker's Percent | Control Grams | 1 | 2 | 3 | 4 | 5 | 6 |
| Flour | 70.0 | 840.0 | | | | | | |
| Water | 42.0 | 504.0 | | | | | | |
| Yeast | 2.0 | 24.0 | | | | | | |
| SSL (ICI) | 0.5 | 5.0 | | | | | | |
| Yeast Food | 0.375 | 4.5 | | | | | | |

| Dough Ingredients | Baker's Percent | Control Grams | 1 | 2 | 3 | 4 | 5 | 6 |
|---|---|---|---|---|---|---|---|---|
| Flour | 30.0 | 360.0 | | | | | | |
| Water | 20.0 | 240.0 | | | | | | |
| extra fine | 8.0 | 96.0 | | | | | | |
| sugar | | | | | | | | |
| Whey | 2.0 | 24.0 | | | | | | |
| Shortening | 2.0 | 24.0 | | | | | | |
| Yeast | 2.0 | 24.0 | | | | | | |
| Salt | 2.0 | 24.0 | | | | | | |
| Distilled monoglycerides | | | | | | | | |

### Procedure:

1) Place all the sponge ingredients into the mixing bowl. Mix for 2 minutes in 1st speed, and 2 minutes in 2nd speed. Take and record the sponge temperature.
2) Place in the fermentation cabinet for 3.5 hours. Punch down once at 1 3/4 hours.
3) After fermentation place the dough side ingredients in the mixing bowl and mix for 1 minute in 1st speed. Take the temperature of the sponge, and place it into the mixing bowl. Mix for 1 minute in 1st speed, and then to full development in 2nd speed.
4) After the dough is mixed to development take and record temperature. Let the dough rest for 10 minutes.
5) After the dough has rested divide the dough into appropriately sized dough pieces suitable for your pan size and let rest for 10 minutes. After rest sheet, and place in greased bread Pullman pan with lids. Place the pan in the proofer, and proof 50˝. The proofer should be set at 105° with 85% R.H.
6) The oven should be preheated to 425°. Bake for 20 minutes.
7) After baking remove from pan immediately. Cool for 60 minutes and bag.

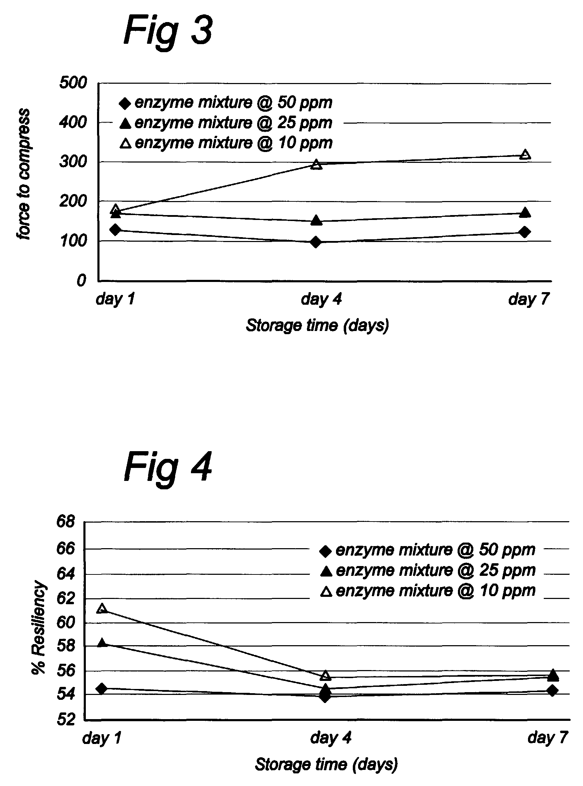

Breads made with bacterial amylase and 10 ppm invertase were acceptable. Figures 3 and 4 show the results.

### COMPARATIVE EXAMPLES 14 to 16

Because sucrose is added along with the donut mix, invertase alone was investigated as a way to reduce the sucrose into simple sugars that would yield a softer texture and a mouthfeel that would dissipate quickly in the mouth (meltaway). The test samples were:
Example 14 control donut mix;
Example 15 donut mix w/0.002% invertase (based upon mix) (no amylase); and
Example 16 donut mix with 0.02% invertase (based upon mix).
Donuts were made as set forth in Examples 9 and 10 with sugar and dry egg yolks being added at time of make-up. Samples were stored in cellophane window cookie boxes: TAXT2 measurements were taken for softness and resiliency at days 1, 7 and 14. Four (4) donuts were tested in triplicate. Data was analyzed statistically for each sampling interval. Donuts were also evaluated for texture subjectively.

Firmness data was analyzed statistically (@ 95% confidence):
Day 1: the control sample was softer than all other variables. From firmest to softest: >15, 16> 14; the invertase samples were the next softest.
Day 7: low level of invertase were definitely softer than the control. The control was similar to the higher level of invertase. 14, 16, statistically 14 > 15, but there was overlap of similarity of 15 with variable 16.
Day 14: both invertase samples were similar to each other and determined to be softer than all of the other variables.
Table of Results with standard deviations are shown in Table 5.

**TABLE 5**

| | 14 | 15 | 16 |
|---|---|---|---|
| D1 soft | 225.1 | 264.7 | 251.6 |
| D7 soft | 520.8 | 415.7 | 444.7 |
| D14 soft | 708.2 | 576.8 | 576.8 |
| D1 std dev | 20.1 | 32.1 | 22.8 |
| D7 std dev | 84.0 | 104.1 | 97.9 |
| D14 std dev | 118.1 | 128.1 | 41.0 |
| D1 resil. | 42.4 | 44.1 | 47.4 |
| D7 resil. | 38.0 | 42.7 | 42.1 |
| D14 resil. | 36.7 | 36.0 | 35.7 |
| D1 std dev | 4.8 | 2.5 | 2.2 |
| D7 std dev | 3.6 | 2.7 | 3.1 |
| D14 std dev | 12.0 | 3.7 | 3.4 |

Resiliency data was analyzed statistically (@ 95% confidence):
Day 1: The invertase samples are more resilient than all other variables. 16, >14, 15.
Day 7: The invertase samples (all are similar to each other).
Day 14: Variables 14, 15, 16, (are similar to each other).

Table 6 shows the tasters results.

**TABLE 6**

| | Variable | Day 1 interval | Day 7 interval | Day 14 interval |
|---|---|---|---|---|
| 14 | Control | soft, clean breakdown in mouth | still edible; not dry; initial firmness | hard; firmest of all |
| 15 | 0.002% Invertase | softer than control, clean bkdown | feels soft; melt is good; easy bkdown | soft; softest of all variables |
| 16 | 0.02% Invertase | very soft, melts away, clean bkdown | soft; slightly dry; meltaway OK | soft |

Softness was improved at day 7 and day 14 using the invertase enzyme. From this single trial an effective level appears to be 0.002%. Increasing the enzyme concentration does not appear to increase its efficacy. Resiliency of the donuts with the invertase was similar to the control and thus shelf life was not extended. Subjectively, the donuts with invertase had good mouthfeel and dissipated quicker in the mouth than the control. Other variables were more cohesive and lingered longer on the palate. Thus the products were not commercially acceptable.

### COMPARATIVE EXAMPLE 17, 18, 19

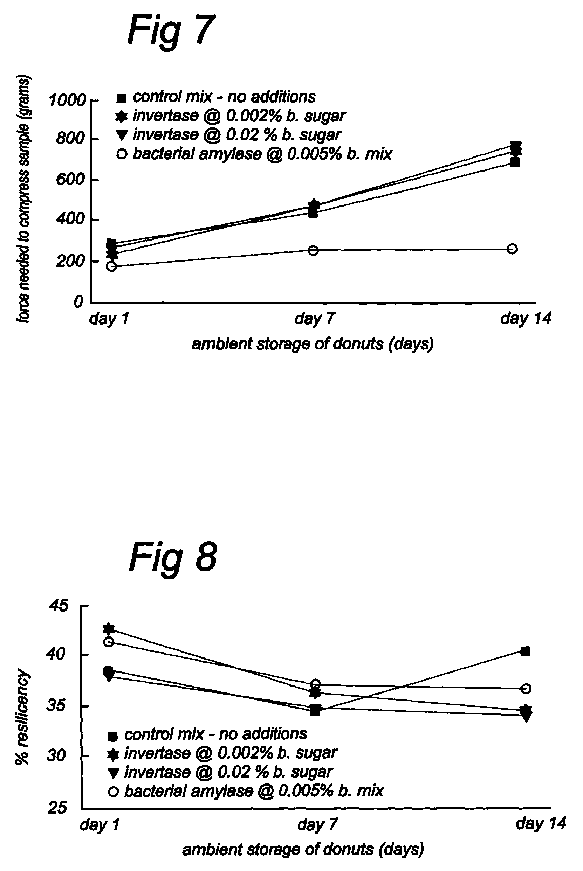

Donuts made from a donut mix are shown in Figures 7 and 8 and Table 7.

**TABLE 7**

| Softness | D-1 | D-2 | D-7 | D-8 | D-12 | D-13 | D-15 | D-16 | D-17 | D-18 |
|---|---|---|---|---|---|---|---|---|---|---|
| Day 1 | 243.0 | 234.0 | 242.0 | 262.0 | 321.0 | 362.0 | 328.0 | 271.0 | 274.0 | 175.0 |
| Day 7 | 413.0 | 476.0 | 516.0 | 447.0 | 402.0 | 411.0 | 457.0 | 489.0 | 486.0 | 270.0 |
| Day 14 | 724.0 | 668.0 | 918.0 | 587.0 | 709.0 | 686.0 | 943.0 | 772.0 | 787.0 | 287.0 |

| Resiliency | | | | | | | | | | |
|---|---|---|---|---|---|---|---|---|---|---|
| Day 1 | 38.3 | 37.5 | 33.3 | 31.2 | 39.3 | 37.9 | 37.4 | 42.4 | 38.2 | 41.2 |
| Day 7 | 34.8 | 36.8 | 32.6 | 28.9 | 36.4 | 35.0 | 36.6 | 36.3 | 36.8 | 37.4 |
| Day 14 | 40.8 | 36.4 | 31.6 | 26.4 | 36.6 | 34.2 | 31.6 | 34.9 | 34.3 | 37.1 |
| D = days | | | | | | | | | | |

The results were obtained with a TAXT2. The invertase alone did not produce an acceptable donut.

It is intended that the foregoing description be only illustrative of the present invention and that the present invention be limited only by the hereinafter appended claims.

## Claims

1. A method for making a high moisture, extended shelf life grain flour based food product which comprises:
(a) providing a mixture which comprises water, the grain flour, sucrose, egg, milk, shortening, amylase, optionally flavors, chemical leavening agent or yeast, and an amount of an invertase which can convert a portion of the sucrose to dextrose and fructose;
(b) forming the bread mixture; and
(c) baking or frying the formed bread mixture to produce the grain flour based product.

2. A method for making a high moisture, grain flour based food product with an extended shelf life which comprises:
(a) providing a mixture which comprises water, the grain flour, sucrose, corn sugar, egg yolk, skim milk, shortening, sodium pyrophosphate as the leaven, bacterial amylase, optionally flavors and between about 0.0001 and 1 percent by weight of an invertase which can convert a portion of the sucrose into dextrose and fructose;
(b) forming the mixture; and
(c) baking or frying the formed mixture to produce the grain flour based food product.

3. A method for making donuts with an extended shelf life which comprises:
(a) providing a donut mixture which comprises water, grain flour, sucrose, corn sugar, egg yolk, skim milk, shortening, sodium pyrophosphate, bacterial amylase and optionally flavors and between about 0.0001 and 1 percent by weight of an invertase which can convert a portion of the sucrose into dextrose and fructose;
(b) forming the donut mixture; and
(c) baking or frying the formed donut mixture to produce the donuts.

4. A dry mixture which comprises water, flour, sucrose, egg, milk, shortening, amylase, optionally flavors, chemical leavening or yeast, and invertase in an amount which converts a portion of the sucrose to dextrose and fructose in the presence of water, wherein the dry mixture is to be mixed with egg, shortening and water and then baked or fried to form a grain flour based food product with an extended shelf life.

5. An dry mixture which comprises: the grain flour, sucrose, corn sugar, dry skim milk, sodium pyrophosphate and bacterial amylase, optionally flavors admixed with an invertase, wherein the invertase is between about 0.0001 and 1 percent by weight of the mixture, wherein the dry bread mixture is to be mixed with egg yolk, shortening, and water and then baked or fried to form a grain flour based food product with an extended shelf life and a high moisture content.

6. A dry donut mixture which comprises grain flour, sucrose, corn sugar, dry skim milk, sodium pyrophosphate, bacterial amylase, optionally flavors admixed with an invertase, wherein the invertase is between about 0.0001 and 1 percent by weight of the donut mixture, wherein the dry donut mixture is to be mixed with egg yolk, shortening, and water and baked or fried to form the donut with an extended shelf life.

7. An enzyme preparation for use in making a high moisture, grain flour based food product which comprises:
(a) bacterial amylase; and
(b) invertase, wherein the weight ratio of (a) to (b) is between about 5 x 10⁻⁴ to 1 and 0.4 to 1.
